# EUROPÄISCHE PATENTSCHRIFT

(11) **EP 0 991 037 B1**
(45) Veröffentlichungstag und Bekanntmachung des Hinweises auf die Patenterteilung: **29.10.2003**
(21) Anmeldenummer: 99116913.7
(22) Anmeldetag: 27.08.1999
(51) Int. Cl.: G07F 11/16, G07F 11/32, G07F 11/42

(54) **Ausgabeautomat mit gemeinsamem Zufuhrmanipulator**
Dispensing machine with a common delivery handler
Distributeur avec un manipulateur de distribution commun

(30) Priorität: 01.10.1998 DE 29817529 U
(43) Veröffentlichungstag der Anmeldung: 05.04.2000
(73) Patentinhaber: GEBR. WILLACH GmbH, D-53809 Ruppichteroth (DE)
(72) Erfinder: Willach, Ulrich, 53819 Neunkirchen-Seelscheid (DE); Schmitt, Werner, 53809 Ruppichteroth-Schönenberg (DE)
(74) Vertreter: Selting, Günther, Dipl.-Ing.

(56) Entgegenhaltungen:
- US-A- 4 267 942
- US-A- 4 717 044
- US-A- 4 847 764
- US-A- 4 867 628

## Beschreibung

Die Erfindung betrifft einen Ausgabeautomaten zur Ausgabe von Waren, insbesondere in Apotheken zur Entlastung des Pharmazeuten von Such- und Laufvorgängen.

Bekannt sind zahlreiche Formen von Ausgabeautomaten, die insbesondere in Apotheken benutzt werden. Solche Ausgabeautomaten haben einen Manipulator, der computergesteuert ein gewünschtes Produkt aus einem Regal entnimmt und es entweder direkt oder über einen Zuförderer in die Nähe der Verkaufstheke fördert. Neben Regalen mit horizontalen Regalfächern sind auch Schrägfachbodenregale bekannt, bei denen die Waren jeweils auf einem Schrägfachboden in geordneten Reihen hintereinander liegen, wobei jeweils die unterste Ware der Reihe an einem Anschlagelement abgestützt ist. Ein Roboter kann die in einer definierten Position befindliche unterste Ware ergreifen und in einen Warenkorb hinein ablegen. Der Roboter weist einen Greifer in Form einer Zange oder eines Saugnapfes auf, welcher an den Gegenstand angesetzt wird, um diesen fest zu greifen und aus dem Regalfach zu entnehmen. Wenn es sich bei dem Regal um ein Schrägfachbodenregal handelt, bei dem Reihen von Gegenständen jeweils an einem unteren Anschlagelement abgestützt sind, enthält oft jeder Schrägfachboden Schlitze, durch die hindurch ein Greifer an dem untersten Gegenstand angreifen kann. In jedem Fall ist eine Greifvorrichtung erforderlich, von der der zu entnehmende Gegenstand festgehalten wird und die dann entlang einer vorgegebenen Bewegungsbahn geführt wird, um den Gegenstand an einen anderen Platz zu bringen. Die Steuerung einer solchen Greifvorrichtung erfordert neben der reinen Bewegungssteuerung auch noch die Steuerung des Greifvorganges. Es kann vorkommen, daß ein Greifer versagt oder einen Gegenstand nicht ergreift oder fallen läßt.

Der Oberbegriff des Anspruchs 1 geht aus von einem Ausgabeautomaten, wie er in US-A-4,867,628 beschrieben ist. Dieser Ausgabeautomat weist einen Manipulator auf, der in einem Freiraum vor einem Schrägfachbodenregal gesteuert verfahrbar ist. Der Manipulator enthält einen Wagen mit einem in Richtung auf die Schrägfachböden schräg nach oben ausfahrbaren Manipulatorfinger. Der Manipulatorfinger ist an seinem vorderen Ende abgewinkelt. Er greift mit einer Schrägfläche an der Vorderkante des zu entnehmenden Gegenstandes an und hebt diesen dadurch von dem Schrägfachboden ab. Der Gegenstand gleitet dann auf einer Tragfläche des Manipulatorfingers herab. Dabei müssen besondere Maßnahmen ergriffen werden, um zu verhindern, dass weitere Gegenstände, die auf dem selben Schrägfachboden aufliegen, ebenfalls herabgleiten.

Der Erfindung liegt die Aufgabe zugrunde, einen Ausgabeautomaten mit Schrägfachbodenregal zu schaffen, bei dem die Manipulatorsteuerung und das Entnehmen von Gegenständen von den Schrägfachböden vereinfacht sind.

Die Lösung dieser Aufgabe erfolgt erfindungsgemäß mit den im Anspruch 1 angegebenen Merkmalen.

Der Manipulator weist einen Manipulatorarm auf, der gesteuert bewegbar und vor einem ausgewählten Schrägfachboden an ausgewählter Stelle positionierbar ist. Während der Manipulatorarm, der auf diese Weise positioniert wurde, seine Position beibehält, fährt aus ihm ein Manipulatorfinger aus, der relativ zu dem Manipulatorarm beweg bar ist und der nacheinander eine Ausfahrbewegung, eine Hubbewegung zum Untergreifen des zu entnehmenden Gegenstandes und dann eine Einfahrbewegung ausführt.

Um Gegenstände, die auf einem Schrägfachboden vorne liegend an einem Anschlagelement abgestützt sind, aus dem Schrägfachbodenregal herauszunehmen, erfolgen zwei voneinander getrennte Bewegungen. Während der Manipulatorarm lediglich die Positionierung ausführt, beschränkt sich die Funktion des Manipulatorfingers auf die reine Entnahmebewegung. Obwohl die Entnahmebewegung sich aus der Ausfahr-, der Hub- und der Einfahrbewegung zusammensetzt, ist hierfür dennoch nur ein Antrieb erforderlich. Für die Mitnahme des Gegenstandes durch den Manipulatorfinger ist weder ein zusätzlicher Antrieb noch eine zusätzliche Greifvorrichtung erforderlich.

Durch die Aufteilung in einen Manipulatorarm und einen Manipulatorfinger, der relativ zu dem Manipulatorarm bewegbar ist, wird die Manipulatorsteuerung vereinfacht. Ein besonderer Vorteil besteht darin, daß der Freiraum, in dem der Manipulator sich bewegt, schmal ausgebildet sein kann. Ein weiterer Vorteil ist, daß die vom Manipulatorfinger ausgeführte Ausfahr-, Hub- und Einfahrbewegung nur durch einen einzigen Antrieb bewirkt wird und daß die Mitnahme des Gegenstandes durch bloßes Untergreifen erfolgt.

Es erfolgt keine Mitnahme des Gegenstandes durch den Manipulatorfinger während seiner Einfahrbewegung. Er hebt den in dem Schrägfachbodenregal vorn liegenden Gegenstand über das Anschlagelement hinaus an, ohne ihn festzuhalten. Der Gegenstand gleitet unter Schwerkraftwirkung über die schräge Gleitfläche des Manipulatorfingers und wird dadurch aus dem Schrägfachbodenregal entfernt. Der Manipulatorfinger bewirkt keine Haftreibung, keine Klemmung und kein Festsaugen des Gegenstandes. Er entfernt den Gegenstand durch bloßes Anheben über das Anschlagelement. Für die Entnahmebewegung des Gegenstandes ist weder eine Steuerung noch irgendein Kraftaufwand bzw. Dosierung einer Greifkraft erforderlich. Der Gegenstand gleitet vielmehr nach dem Anheben über die schräge Gleitfläche selbsttätig an seinen Bestimmungsort, von dem er abtransportiert oder manuell entnommen werden kann. Durch Verzicht auf eine Greifvorrichtung erfolgt eine sehr schonende Behandlung der Gegenstände. Außerdem ist ausgeschlossen, daß ein Gegenstand durch unbeabsichtigtes Öffnen einer Greifvorrichtung herabfällt. Die Gegenstände werden auf einem schrägen Tablett liegend transportiert.

Der Manipulatorfinger ist derart geführt, daß er beim Ausfahren eine Hubbewegung in bezug auf den Wagen ausführt. Die Selektionsbewegung oder Positionierbewegung des Wagens und die Entnahmebewegung sind voneinander getrennt. Die Entnahmebewegung findet nur innerhalb des Wagens statt, nämlich durch Ausfahren und Anheben des Manipulatorfingers aus dem Wagen.

Neben der Funktion des Anhebens des zu entnehmenden Gegenstandes bewirkt der Manipulatorfinger auch das Abfangen und sanfte Absenken der in dem Stapel nachfolgenden Gegenstände. Während der Rückzugsbewegung des Manipulatorfingers werden diese Gegenstände sanft gegen das Anschlagelement gesetzt, so daß Stöße vermieden werden.

Vorzugsweise führt der Manipulatorfinger auf eine Tragfläche des Wagens, wo er die entnommene Ware ablegt und anschließend unter die Tragfläche abtaucht. Auf diese Weise erfolgt ein geordnetes Ablegen der entnommenen Ware auf dem Wagen ohne freien Fall.

Die Tragfläche des Wagens kann eine Schrägfläche sein, die von dem Schrägfachboden weg abfällt und die entnommene Ware gegen eine Gleitwand anliegen läßt. Durch eine in der Gleitwand vorgesehene Ausgabeöffnung kann dann die Ausgabe des Gegenstandes erfolgen, ohne daß an dem Wagen oder der Ausgabeöffnung eine bewegbare Steuervorrichtung erforderlich wäre. Auch in diesem Fall erfolgt die Ausgabe ausschließlich unter Schwerkrafteinwirkung.

Der Ausgabeautomat eignet sich als Verkaufshilfe zur Unterstützung eines Verkäufers. Ein besonderes Anwendungsgebiet ist dasjenige der Apotheken, wo der Ausgabeautomat im Rahmen einer Apothekenausstattung verwendbar ist. In Apotheken muß eine große Vielzahl von Produkten vorrätig gehalten werden. Diese Produkte sind zumeist in rechteckigen Packungen enthalten. Daher eignen sich Apothekenprodukte besonders für eine automatisierte Ausgabe. Alternativ kann der Ausgabeautomat aber auch für die unmittelbare Kundenbedienung benutzt werden, beispielsweise als geldbetätigter Ausgabeautomat für eine Vielzahl wählbarer Produkte.

Im folgenden wird unter Bezugnahme auf die Zeichnungen ein Ausführungsbeispiel der Erfindung näher erläutert.

Es zeigen:
- Fig. 1: eine schematische Darstellung eines Apothekenraumes, der mit zwei Ausgabeautomaten ausgestattet ist,
- Fig. 2: einen vertikalen Querschnitt durch einen Ausgabeautomaten,
- Fig. 3: einen Schnitt entlang der Linie III-III von Fig. 2,
- Fig. 4: in vergrößertem Maßstab eine Seitenansicht des Wagens des Manipulators, und
- Fig. 5: einen Querschnitt entlang der Linie V-V von Fig. 4,
- Fign. 6 bis 10: verschiedene Phasen des Entnahmevorganges.

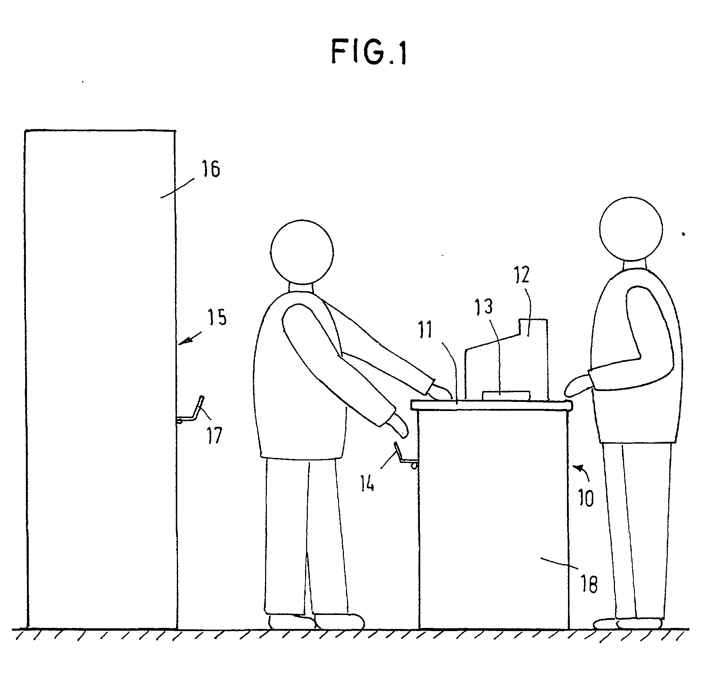

Gemäß Fig. 1 ist ein Ausgabeautomat 10 in einen Handverkaufstisch integriert, der an seiner Oberseite durch eine Platte 11 abgeschlossen ist. Auf dem Handverkaufstisch 10 steht die Registrierkasse 12, die normalerweise mit einem (nicht dargestellten) Barcodeleser ausgestattet ist. Außerdem steht auf dem Handverkaufstisch eine Eingabevorrichtung 13 mit einer Tastatur zur Eingabe der Nummer oder einer Bezeichnung des auszugebenden Produkts.

Auf der Bedienungsseite des Ausgabeautomaten 10 befindet sich ein Ausgabefach 14, aus dem das ausgegebene Produkt entnommen und dem Kunden überreicht werden kann.

Zusätzlich ist ein anderer Ausgabeautomat 15 dargestellt, der in eine Schrankwand 16 integriert ist. Auch der Ausgabeautomat 15 befindet sich in einem geschlossenen Gehäuse, das den Zugriff durch eine Tür hindurch ermöglicht. Das Ausgabefach 17 ist für den Verkäufer griffbereit zugänglich. Alternativ hierzu kann der Verkaufsautomat als Unterschrank einer Regalwand in das Einrichtungssystem integriert sein.

Bei dem vorliegenden Ausführungsbeispiel handelt es sich um eine Apothekeneinrichtung. In dem Ausgabeautomaten werden zahlreiche Produkte auf Abruf vorrätig gehalten. Der Pharmazeut gibt an der Eingabevorrichtung 13 die Identifizierung des auszugebenden Produkts ein und der jeweilige Ausgabeautomat 10 oder 15 stellt dieses Produkt anschließend im Ausgabefach 14 bzw. 17 zur Entnahme bereit. Es ist auch möglich, anstelle der Eingabevorrichtung 13 die Eingabevorrichtung der Registrierkasse 12 für die Befehlseingabe an den Ausgabeautomaten zu benutzen. Es ist auch möglich, die von der Registrierkasse angezeigte Lagerplatznummer des gewünschten Produkts in die Eingabevorrichtung manuell einzugeben.

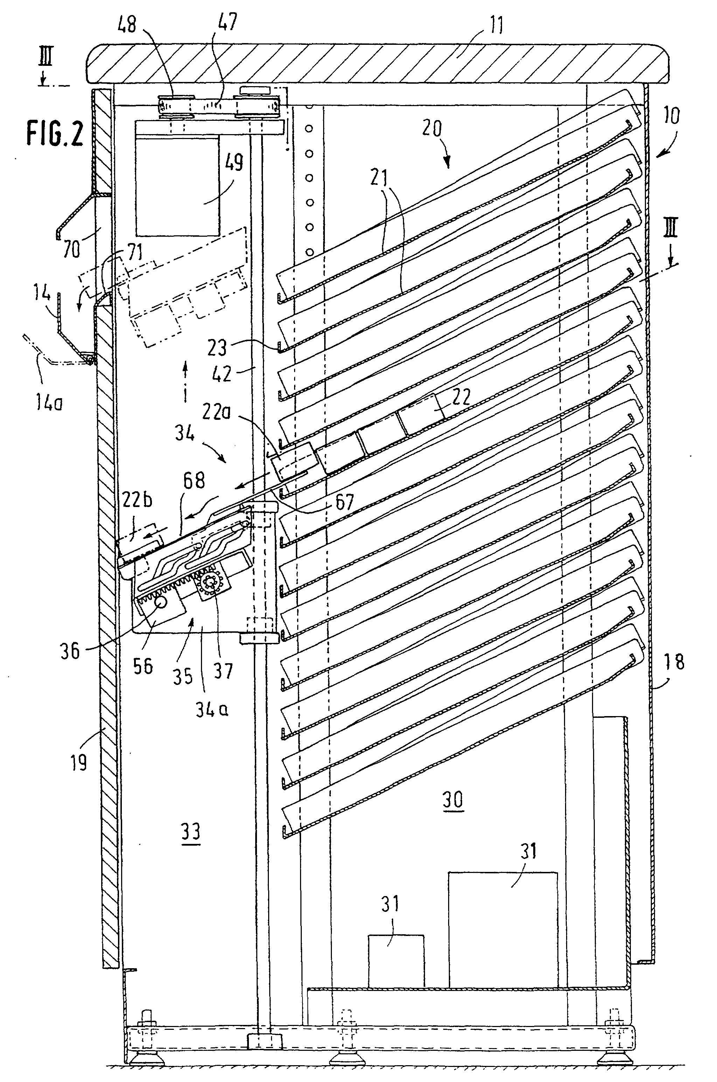

Der Ausgabeautomat 10 weist gemäß Fig. 2 ein allseitig geschlossenes Gehäuse 18 auf, das nur zur Bedienerseite hin eine zu öffnende Tür 19 hat, an deren Außenseite sich das Ausgabefach 14 befindet.

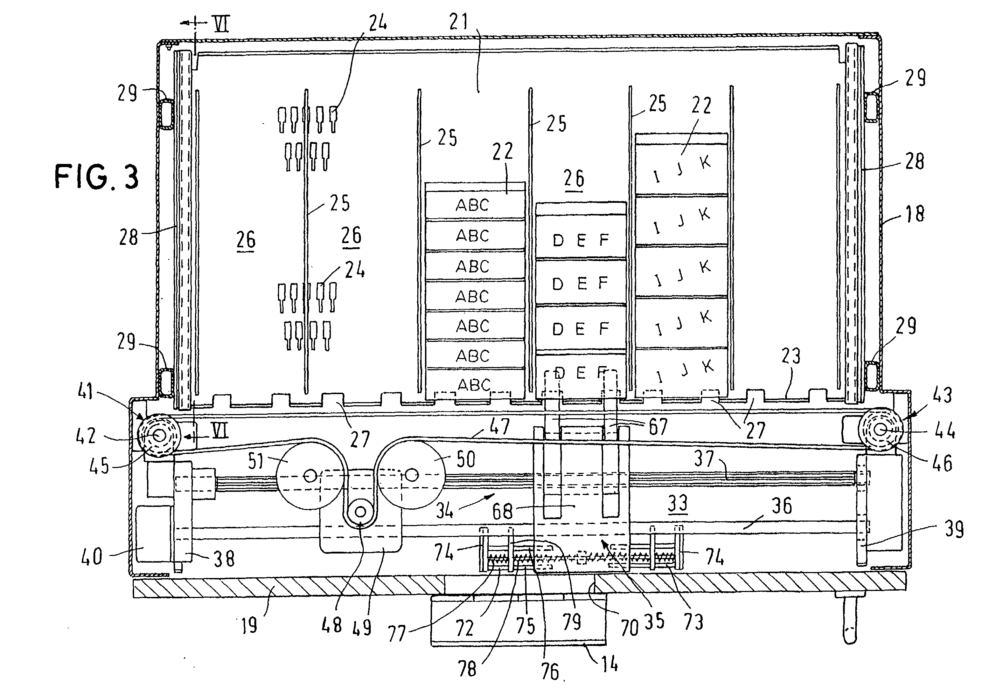

In dem Gehäuse 18 ist das Schrägfachbodenregal 20 angeordnet. Dieses weist zahlreiche übereinander angeordnete Schrägfachböden 21 auf. Die Schrägfachböden 21 sind im eingeschobenen Zustand unter einem Winkel geneigt, der so groß ist, daß die auf den Schrägfachböden 21 abgelegten Waren 22 aufgrund ihres Gewichts gegen ein am unteren Ende des Schrägfachbodens vorgesehenes Anschlagelement 23 stoßen. Der Schrägfachboden 21 besteht aus einer Platte mit glatter und ebener Oberseite, die mit Ausstanzungen 24 (Fig. 3) versehen ist, welche das Einsetzen von Trennleisten 25 in unterschiedlichen wählbaren Positionen ermöglichen. Durch die Trennleisten 25 werden Warenkanäle 26 unterteilt, die unterschiedliche Breiten haben können, je nach Länge oder Breite der in ihnen zu stapelnden Waren 22. Dadurch ist eine gute Raumausnutzung möglich, weil die Breite der Kanäle 26 an die jeweilige Warenabmessungen sehr genau angepaßt werden kann. Andererseits ist sichergestellt, daß die Waren 22 stapelweise in jedem Warenkanal exakt geführt werden.

An der Unterkante des Schrägfachbodens 21 befinden sich Schlitze 27, in denen auch die von dem Anschlagelement 23 gebildete Querleiste unterbrochen ist.

Die Schrägfachböden 21 erstrecken sich im wesentlichen über die gesamte Breite des Gehäuses 18 und sie sind an den Seiten in Führungsschienen 28 geführt, welche als Anbauschienen im Innern des Gehäuses 18 an vertikalen Tragleisten 29 montiert sind. Die Tragleisten 29 haben zahlreiche Löcher, so daß die Führungsschienen 28 in unterschiedlichen Höhen angeordnet werden können, je nach Größe der auf den darunterliegenden Schrägfachböden zu legenden Gegenstände. Die Schrägfachböden 21 bilden also in der Höhe verstellbare schrägstehende Tabletts, die unterschiedlich unterteilt werden können. Jeweils zwei Schlitze 27 bilden ein Schlitzpaar. Die Schlitzpaare sind in gleichmäßigen Abständen angeordnet.

Unter dem Schrägfachbodenregal 20 befindet sich ein Raum 30 (Figur 2), in dem Steueraggregate 31 sowie die Stromversorgung und andere Hilfselemente untergebracht sind.

Vor der Entnahmeseite des Schrägfachbodenregals 20 ist ein Freiraum 33 vorgesehen, der von der Tür 19 begrenzt ist und in dem der Manipulator 34 bewegbar ist.

Der Manipulator 34 weist einen als Wagen 35 ausgebildeten Manipulatorarm 34a auf, welcher auf einer horizontalen Spindel 36 und einer hierzu parallelen Keilwelle 37 verschiebbar gehalten ist. Die Spindel 36 ist eine Gewindespindel, die mit einer Spindelmutter 56 des Wagens 35 in Eingriff ist. Durch eine Drehung der Spindel 36 wird der Wagen 35 horizontal parallel zu den Schrägfachböden über die gesamte Breite der Schrägfachböden verschoben.

Die Spindel 36 und die Keilwelle 37 sind an dem einen Ende in einem Halter 38 und an dem entgegengesetzten Ende in einem Halter 39 gelagert (Fig. 3). An dem Halter 38 ist ein die Spindel 36 drehender Motor 40 befestigt, welcher den horizontalen Querantrieb des Wagens 35 bewirkt. Der Halter 38 ist mit einem vertikalen Spindeltrieb 41 verbunden, dessen Gewindespindel 42 sich über die gesamte Höhe des Freiraums 33 erstreckt. Der Halter 39 ist ebenfalls mit einem vertikalen Spindeltrieb 43 verbunden, dessen vertikale Spindel 44 sich über die gesamte Höhe erstreckt. Der Spindeltrieb 41 weist eine am Halter 38 befestigte Spindelmutter 45 auf und der Spindeltrieb 43 weist eine am Halter 39 befestigte Spindelmutter 46 auf. Die Spindeln 42,44 sind von einem endlos umlaufenden Zahnriemen 47 synchron zueinander angetrieben. Hierdurch wird der Manipulator längs der vertikalen Spindeln 42 und 44 in der Höhe verfahren. Der Zahnriemen 47 läuft um Riemenscheiben, die mit den Spindeln 42,44 fest verbunden sind. Er läuft ferner um eine Antriebsscheibe 48, die von einem Motor 49 angetrieben ist. Umlenkscheiben 50,51 sorgen dafür, daß der Zahnriemen 47 die Antriebsscheibe 48 in einem Umfangswinkel von 180° umschließt. Der gesamte Zahnriementrieb ist am oberen Ende des Freiraums 33 unter der Platte 11 am Gehäuse 18 in fester Höhe angebracht und die Spindeln 42,44 sind ebenfalls am Gehäuse 18 ortsfest drehbar gelagert. Der aus der Spindel 36 der Keilwelle 37 den Haltern 38,39 und den Spindelmuttern 45,46 bestehende Vertikalschlitten bildet den Führungsrahmen zur horizontalen Führung des Wagens 35. Der Motor 40 für den Horizontalantrieb und der Motor 49 für den Vertikalantrieb sind beide Schrittmotore, die elektronisch in der Weise gesteuert sind, daß der Wagen 35 bestimmte Zielpositionen in vertikaler und horizontaler Richtung anfahren kann.

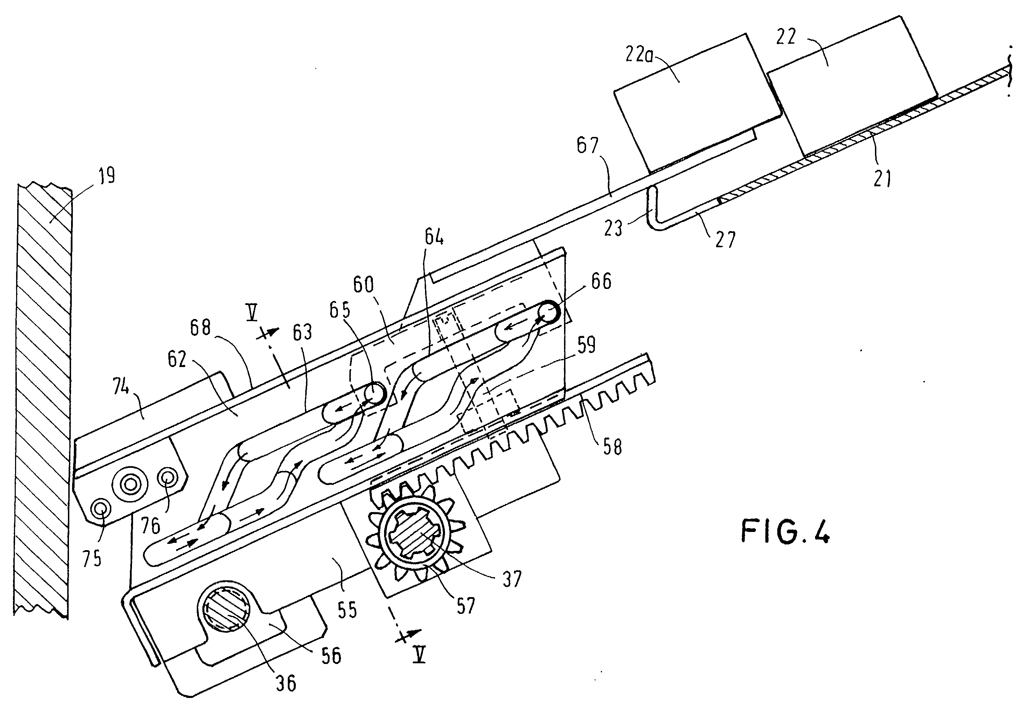

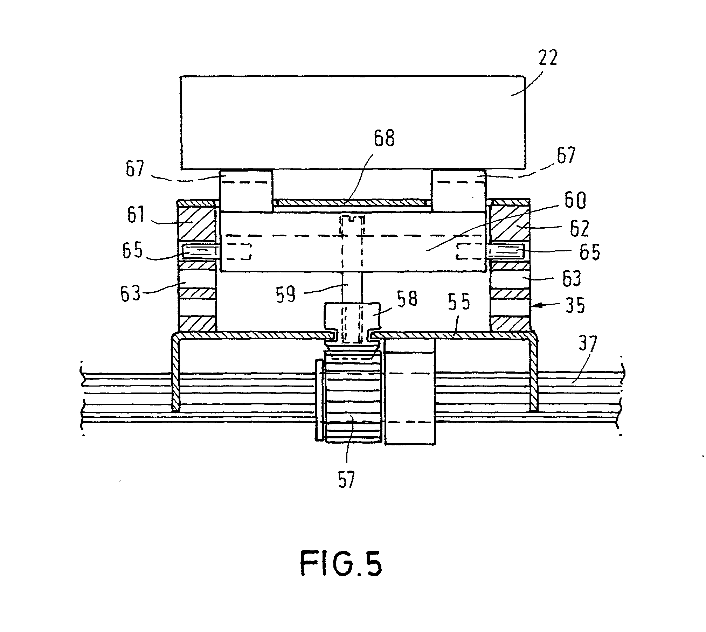

Der Wagen 35 weist einen Träger 55 auf, der eine mit der Spindel 36 in Eingriff stehende Spindelmutter 56 enthält und außerdem an der Keilwelle 37 abgestützt ist. Wie aus Figur 2 hervorgeht, ist die Keilwelle 37 höher angeordnet als die Spindel 36. Der Träger 55 steigt zu den Schrägfachböden 21 hin an und zwar generell mit derselben Steigung, die die Schrägfachböden haben. Auf der Keilwelle 37 gleitet ein Zahnrad 57 (Figur 4), welches längs der Keilwelle verschiebbar ist und mit einer Zahnstange 58 in Eingriff steht, die an dem Träger 55 in Querrichtung und mit der gleichen Steigung wie die Schrägfachböden 21 verschiebbar ist. Die Zahnstange 58 ist gemäß Figur 5 an dem Träger 55 verschiebbar geführt. Sie ist mit einem aufragenden Stift 59 verbunden, welcher in einen längs des Trägers 55 verschiebbaren Schieber 60 hineinragt. Der Schieber 60 ist zwischen zwei Kulissenplatten 61,62 des Trägers 55 verschiebbar. Die Kulissenplatten enthalten schlitzförmige Führungsbahnen 63,64. In den Führungsbahnen 63 ist der Schieber 60 mit nach entgegengesetzten Richtungen abstehenden Stiften 65 geführt und in den Führungsbahnen 64 ist der Schieber 60 ebenfalls mit nach entgegengesetzten Richtungen abstehenden Stiften 66 geführt. Die Bewegung des Schiebers 60 erfolgt durch den Stift 59, der von der Zahnstange 58 linear angetrieben wird. Dadurch, daß die Stifte 65 und 66 in die einander gleichen Führungsbahnen 63 und 64 eingreifen, wird der Schieber 60 auch in Querrichtung verschoben, wobei er jedoch seine parallele (schräge) Ausrichtung beibehält. Die Führungsbahnen 63 und 64 sind nach Art von Hysteresekurven ausgebildet. Sie bewirken, daß die Höhenlage des Schiebers 60 in Bezug auf den Träger 55 sich verändert.

Die Oberfläche des Trägers 55 bildet eine Tragfläche 68, auf die die aus dem Regal entlassenen Gegenstände 22 gleiten.

Der Manipulatorarm 34a weist zwei an dem Schieber 60 befestigte in Richtung auf die Schrägfachböden 21 abstehende plattenförmige Finger 67 auf, die dann, wenn sie sich im Einfahrzustand befinden, in Schlitzen der Tragfläche 68 versenkt sind und nicht über die Tragfläche hinaus überstehen. Wird dagegen der Schieber 60 durch die Zahnstange 58 vorgeschoben (Figur 4), dann heben die Führungsbahnen 63 und 64 den Schieber 60 an, wodurch die Finger 67 über die Tragfläche 68 hinaus angehoben werden. Hierbei behalten die Finger 67 ihre Parallelausrichtung zu den Schrägfachböden 21 bei.

Der gegenseitige Abstand der beiden Finger 67 ist gleich dem Abstand der Schlitze 27 eines Paares. Der Wagen 35 wird vor einem Schrägfachboden 21 so positioniert, daß die Finger 67 genau mit den beiden Schlitzen 27 fluchten. Wird dann der Schieber 60 durch die Zahnstange 58 ausgefahren, bewegen sich die Finger 67 von unten durch die Schlitze 27 hindurch, wobei sie den gegen das Anschlagelement 23 stoßenden vordersten Gegenstand 22a untergreifen und anheben. Dabei gleitet der Gegenstand 22a auf den Fingern 67, um schließlich auf die Tragfläche 68 zu rutschen, bis er gegen die Innenseite der Tür 19 stößt. Die nachfolgenden Gegenstände 22 des betreffenden Warenkanals 26 gleiten an dem Schrägfachboden 21 herab, bis der dann vorderste Gegenstand gegen das Anschlagelement 23 stößt.

In Figur 2 ist dargestellt, wie die Finger 67 den Gegenstand 22a über das Anschlagelement 23 hinaus hochgehoben haben. Der Gegenstand 22a gleitet unter Schwerkraftwirkung entlang der Finger 67 und der Tragfläche 68 bis er gegen die Innenseite der Tür 19 stößt und dann die Stellung 22b einnimmt. Die nachfolgenden Gegenstände 22 rücken automatisch nach. Auf diese Weise bewirkt der Manipulator 34 durch bloßes Anheben der Finger 67 eine Vereinzelung des vordersten Gegenstandes 22a und ohne irgendwelche Steuervorgänge das Nachrücken der übrigen Gegenstände 22.

Wenn ein Gegenstand 22b auf der schrägen Tragfläche 68 ruht, wird er von der Tür 19, die eine Anlagefläche oder Gleitfläche bildet, abgestützt. Der Wagen 35 wird durch seine Seitwärtsbewegung in eine unter der Ausgabeöffnung 70 liegende Position gefahren und anschließend vertikal hochgefahren. Hierbei gelangt der Gegenstand 22b an die Unterkante der Ausgabeöffnung 70. Die Unterkante 71 läuft zur Innenseite der Tür 19 hin spitz zu, so daß der Gegenstand beim Passieren der Unterkante 71 zunächst mit seiner Frontseite an dieser Unterkante entlangstreicht und anschließend in das Ausgabefach 14 herabfällt, wenn er die Unterkante 71 vollständig passiert hat. Das Ausgabefach 14 kann unter dem Gewicht des Gegenstandes in eine Ausgabestellung 14a (Figur 2) abkippen, aus der der Gegenstand leichter entnommen werden kann. Von dieser Ausgabestellung 14a wird das Ausgabefach 14 durch eine Feder in die Warteposition zurückgestellt, wenn der Gegenstand entnommen wurde.

Um auch Gegenstände von relativ großer Breite handhaben zu können, ist der Wagen 35 mit zwei seitlichen Auslegern 72,73 versehen (Fig. 3). Jeder Ausleger weist eine über die Tragfläche 68 hinaus aufragende Mitnahmeplatte 74 auf, die an Stäben 75,76 bewegbar geführt ist und von Federn 77,78 in die Außenposition gedrückt wird. Zwischen den Federn 77,78 befindet sich eine Stützplatte 79, die nicht über die Tragfläche 68 hinausragt und die dazu dient, das Herabfallen von Gegenständen zwischen Tragfläche und Mitnahmeplatte zu verhindern.

Wenn der Wagen 35 in eine äußerste Endposition gefahren wird, um eine Randposition eines Schrägfachbodens aufzusuchen, stößt der Ausleger 72 bzw. 73 gegen den entsprechenden Halter 38 bzw. 39, wobei der Ausleger unter Zusammendrücken der Federn 77,78 gegen den Wagen 35 gedrückt wird. Auf diese Weise gibt der Ausleger nach und ermöglicht es, den Wagen 35 bis in die Endposition hinein vorzuschieben. Die Ausgabeöffnung 70 und das Ausgabefach 14 haben eine Breite, die der maximalen Spannweite der Ausleger 72,73 entspricht und gleichzeitig das Format des größten auszugebenden Gegenstandes angibt.

Der Manipulator 34 ist derart gesteuert, daß der Wagen 35 in einer Ruhestellung, in der die Tür 19 geöffnet werden kann, eine Referenzposition einnimmt. Die Referenzposition befindet sich an einer Stelle des Freiraums 33, an der der Manipulator 34 das Herausziehen keines der Schrägfachböden 21 behindert. Vorzugsweise befindet sich die Referenzposition in der unteren linken oder rechten Ecke des Freiraums 33, bei Blickrichtung durch die geöffnete Tür. Der unterste Schrägfachboden wird dann über die schräge Tragfläche 68 des Wagens 35 hinweg herausgezogen. Die Referenzposition ist zugleich die Anfangsposition für das nächstfolgende Einschalten des Ausgabeautomaten. Da die Positionssteuerung über Schrittmotore erfolgt, ist es vorteilhaft, daß die Impulszählung ausgehend von einer definierten Referenzposition erfolgen kann.

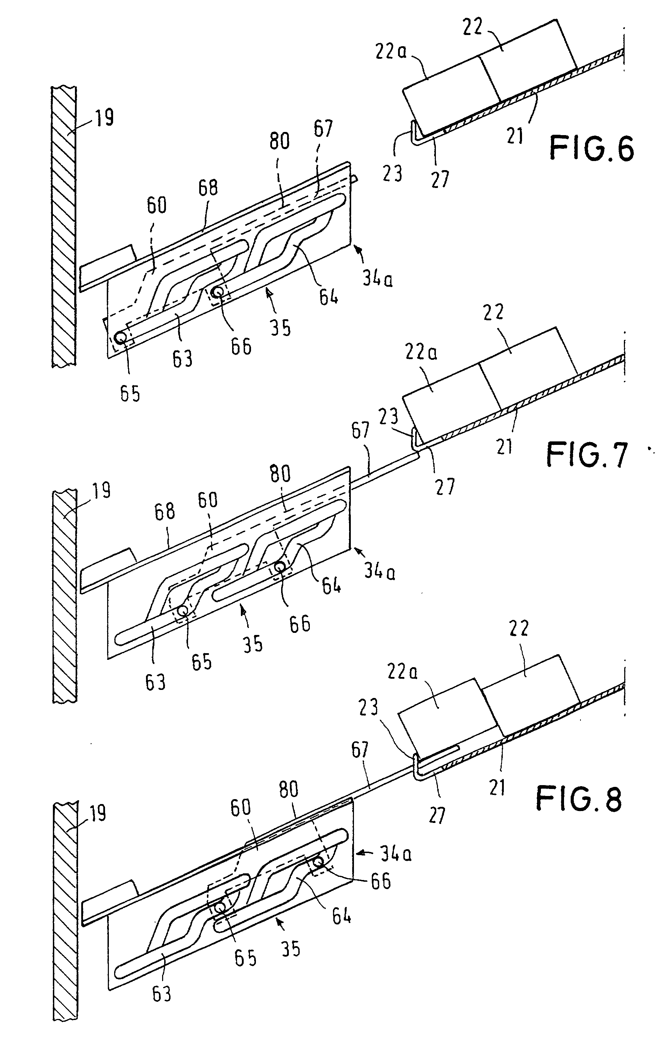

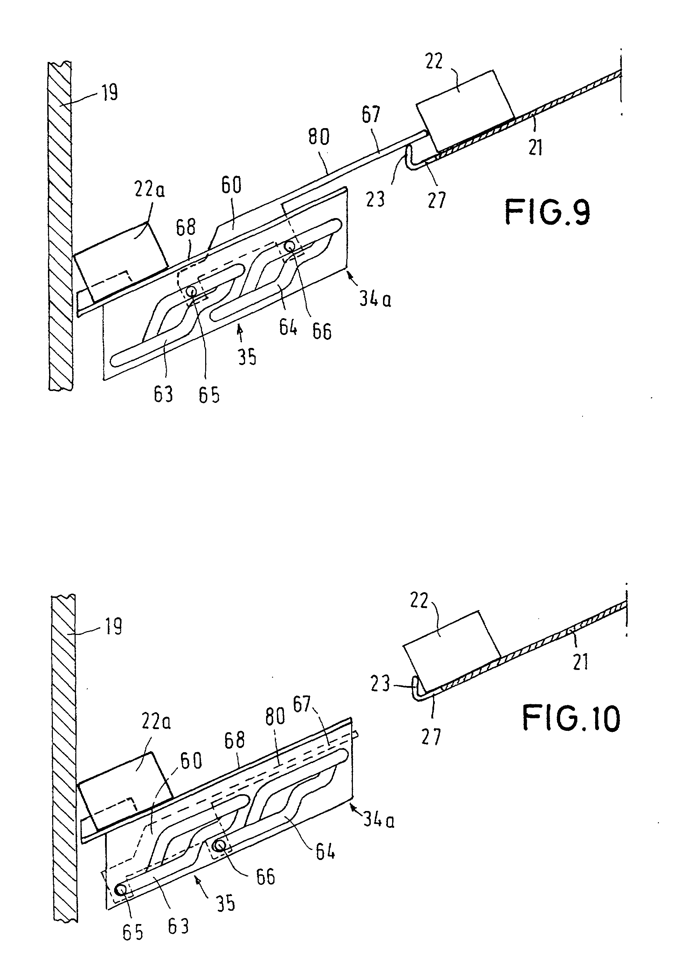

In den Figuren 6 bis 10 sind verschiedene Phasen des Vorgangs der Entnahme eines Gegenstandes 22a von dem Schrägfachboden 21 dargestellt. Zunächst wird der Manipulatorarm 34a bzw. der Wagen 35 gemäß Fig. 6 in die Entnahmeposition vor dem betreffenden Schrägfachboden 21 gefahren, wobei die Finger 67 in den Wagen 35 eingezogen sind und die Oberseite der Finger, die die Gleitfläche 80 bilden, unterhalb der Tragfläche 68 versenkt ist. Dann wird gemäß Fig. 7 der Schieber 60 in seiner Längsrichtung, also unter etwa demselben Winkel, den der Schrägfachboden 21 einnimmt, in Richtung auf den Schrägfachboden 21 ausgefahren, wobei die Stifte 65 und 66 sich zunächst ausschließlich im unteren Bereich der betreffenden Führungsbahn 63,64 bewegen. Wenn das vordere Ende der Finger 67 etwa das Ende des Schrägfachbodens 21 erreicht hat, werden die Stifte 65,66 in den Führungsbahnen 63,64 nach oben gedrückt, so daß die Finger 67 durch die Schlitze 27 des Schrägfachbodens 21 hindurch gemäß Fig. 8 nach oben bewegt werden und den untersten Gegenstand untergreifen und anheben. Fig. 9 zeigt den Zustand, daß die Finger 67 über das Anschlagelement 23 hinaus angehoben worden sind und der Gegenstand 22a über die Gleifläche 80 herabgeglitten ist und nunmehr mit seiner Oberkante gegen die Gleitwand der Tür 19 stößt. Gleichzeitig fängt das vordere Ende der Finger 67 den nächstfolgenden Gegenstand 22 ab und setzt diesen während der Einfahrbewegung der Finger 67 sanft gegen das Anschlagelement 23. Fig. 10 zeigt den Zustand, daß die Finger 67 wieder unter die Tragfläche 68 abgetaucht sind. In diesem Zustand befördert der Wagen 35 den Gegenstand 22a entlang der Gleitfläche bis zur Ausgabeöffnung 70.

## Patentansprüche

1. Ausgabeautomat mit einem Schrägfachbodenregal (20), das mehrere übereinander angeordnete Schrägfachböden (21) enthält, die zur Entnahmeseite hin abfallen und an der Entnahmeseite Schlitze (27) aufweisen, und einem Manipulator (34), der in einem auf der Entnahmeseite vorgesehenen Freiraum (33) gesteuert bewegbar ist, um Gegenstände (22a) herauszunehmen, die auf einem Schrägfachboden (21) vorne liegend an einem Anschlagelement (23) abgestützt sind, wobei der Manipulator (34) einen in dem Freiraum (33) entlang eines zweiachsigen Koordinatensystems bewegbaren Wagen (35) mit mindestens einem Manipulatorfinger (67) aufweist, der durch den Schlitz (27) hindurchgeführt wird und den zu entnehmenden Gegenstand (22a) anhebt, und der Manipulatorfinger (67) eine schräge Gleitfläche (80) aufweist, auf der nach dem Anheben des Gegenstandes (22a) über das Anschlagelement (23) der Gegenstand (22a) unter Schwerkraftwirkung gleitet,
**dadurch gekennzeichnet,**
**dass** der Manipulatorfinger (67) aus dem Wagen (35) ausfahrbar und dabei derart geführt ist, dass er beim Ausfahren eine Hubbewegung in bezug auf den Wagen (35) ausführt.

2. Ausgabeautomat nach Anspruch 1, **dadurch gekennzeichnet, dass** der Manipulatorfinger (67) in der ausgefahrenen und angehobenen Position die nach Entnahme eines Gegenstandes (22a) auf dem Schrägfachboden nachrutschenden weiteren Gegenstände (22) zurückhält und diese durch die Einfahrbewegung sanft gegen das Anschlagelement (23) anlegt.

3. Ausgabeautomat nach Anspruch 1, **dadurch gekennzeichnet, dass** der Manipulatorfinger (67) den entnommenen Gegenstand auf eine Tragfläche (68) des Wagens (35) führt, ihn dort ablegt und anschließend unter die Tragfläche (68) abtaucht.

4. Ausgabeautomat nach Anspruch 3, **dadurch gekennzeichnet, dass** die Tragfläche (68) von dem Schrägfachbodenregal (20) weg abfällt und dass die Bewegungsebene des Wagens (35) von einer den entnommenen Gegenstand auf dem Wagen (35) abstützenden Gleitwand (19) begrenzt ist.

5. Ausgabeautomat nach Anspruch 4, **dadurch gekennzeichnet, dass** die Gleitwand an einer Tür (19) vorgesehen ist.

6. Ausgabeautomat nach Anspruch 4, **dadurch gekennzeichnet, dass** die Gleitwand eine Ausgabeöffnung (70) aufweist.

7. Ausgabeautomat nach Anspruch 6, **dadurch gekennzeichnet, dass** die Ausgabeöffnung (70) eine auf der dem Freiraum (33) zugewandten Innenseite spitz zulaufende Unterkante (71) aufweist, die den Gegenstand erst freigibt, wenn dessen untere Vorderkante die Unterkante (71) überschritten hat.

## Claims

1. Dispensing machine with a storing assembly (20) having inclined shelves, comprising a plurality of stacked inclined shelves (21) sloping towards the take-out side and having slots (27) at the take-out side, and a handler (34) adapted to be moved in a controlled manner within a free space (33) provided at the take-out side so as to take out objects (22a) lying at the front on an inclined shelf (21) and being supported at an abutment element (23), the handler (34) comprising a carriage (35) movable in the free space (33) along a biaxial coordinate system and having at least one handler finger (67) passed through the slot (27) and lifting the object (22a) to be taken out, and wherein the handler finger (67) has an inclined sliding surface (80) over which the object (22a) slides under the effect of gravity after the object (22a) has been lifted over the abutment element (23),
**characterized in**
**that** the handler finger (67) is adapted to be telescoped from the carriage (35) and is guided such that, as it is telescoped, it performs a lifting movement with respect to the carriage (35).

2. The dispensing machine of claim 1, wherein, in the telescoped and lifted position, the handler finger (67) retains the further objects sliding down on the inclined shelf after an object (22a) has been taken out and gently places them against the abutment member (23) by the retraction movement.

3. The dispensing machine of claim 1, wherein the handler finger (67) leads the object (22a) taken out to a supporting surface (68) of the carriage (35), places it thereon, and thereafter dives below the supporting surface (68).

4. The dispensing machine of claim 3, wherein the supporting surface (68) slopes away from the inclined shelving assembly (20), and wherein the plane of movement of the carriage (35) is limited by a slide wall (19) supporting the object taken out on the carriage (35).

5. The dispensing machine of claim 4, wherein the slide wall is provided on a door (19).

6. The dispensing machine of claim 4, wherein the slide wall has a dispensing opening (70).

7. The dispensing machine of claim 6, wherein the dispensing opening (70) has a lower edge (71) pointedly tapering on the inner side facing the free space (33), the lower edge releasing the object only when the lower front edge thereof has passed the lower edge (71).

## Revendications

1. Distributeur automatique comprenant une étagère à compartiments inclinés (20), qui contient plusieurs compartiments inclinés (21) disposés les uns au dessus des autres, qui descendent en direction de la face de distribution et présentent des fentes (27) sur la face de distribution (27), et un manipulateur (34) pouvant être déplacé de manière commandée dans un espace libre (33) prévu sur la face de distribution pour retirer des objets (22a) reposant sur la partie avant d'un compartiment incliné (21) et s'appuyant contre un élément de butée (23), le manipulateur (34) présentant un chariot (35) mobile le long d'un système de coordonnées à deux axes à l'intérieur de l'espace libre (33) et muni d'au moins un doigt de manipulateur (67), qui est guidé à travers la fente (27) et soulève l'objet à distribuer (22a), et le doigt de manipulateur (57) présentant une surface de glissement (80) inclinée sur laquelle l'objet (22a) glisse sous l'effet de la gravité après le soulèvement de l'objet (22a) au-dessus de la butée (23),
**caractérisé en ce que**
le doigt de manipulateur (67) peut effectuer un mouvement de sortie du chariot (35) en étant guidé de manière à décrire un mouvement de levage par rapport au chariot (35) lors du mouvement de sortie.

2. Distributeur automatique selon la revendication 1, **caractérisé en ce que** dans la position sortie et levée, le doigt de manipulateur (67) retient les autres objets (22) descendant sur le compartiment incliné après la distribution d'un objet (22a) et les place doucement contre l'élément de butée (23) par le mouvement d'entrée.

3. Distributeur automatique selon la revendication 1, **caractérisé en ce que** le doigt de manipulateur (67) guide l'objet distribué vers une surface porteuse (68) du chariot (35), le dépose sur celle-ci et plonge ensuite sous la surface porteuse (58).

4. Distributeur automatique selon la revendication 3, **caractérisé en ce que** la surface porteuse (68) descend en s'éloignant de l'étagère à compartiments inclinés (20), et **en ce que** le plan de mouvement du chariot (35) est délimité par une paroi de glissement (19) soutenant l'objet distribué sur le chariot (35).

5. Distributeur automatique selon la revendication 4, **caractérisé en ce que** la paroi de glissement est prévue sur une porte (19).

6. Distributeur automatique selon la revendication 4, **caractérisé en ce que** la paroi de glissement présente une ouverture de distribution (70).

7. Distributeur automatique selon la revendication 6, **caractérisé en ce que** l'ouverture de distribution (70) présente un bord inférieur (71) se terminant en pointe sur la face intérieure en regard de l'espace libre (33), qui ne libère l'objet que lorsque le bord avant inférieur de celui-ci a dépassé le bord inférieur (71).
